# EUROPÄISCHE PATENTSCHRIFT

(11) **EP 1 716 817 B1**
(45) Veröffentlichungstag und Bekanntmachung des Hinweises auf die Patenterteilung: **28.05.2008**
(21) Anmeldenummer: 06006927.5
(22) Anmeldetag: 31.03.2006
(51) Int. Cl.: A61C 1/14, A61C 1/18

(54) **Medizinisches, insbesondere dentalmedizinisches Handstück**
Medical, in particular dental handpiece
Pièce à main médicale, en particulier dentaire

(30) Priorität: 07.04.2005 DE 102005016036; 13.06.2005 DE 102005027263
(43) Veröffentlichungstag der Anmeldung: 02.11.2006
(73) Patentinhaber: Kaltenbach & Voigt GmbH, 88400 Biberach (DE)
(72) Erfinder: Flock, Alexander, 88400 Biberach (DE); Klee, Alexander, 88400 Biberach (DE); Gruber, Helmut, 87740 Buxheim (DE); Lingenhöle, Bernhard, 88447 Warthausen (DE); Rösch, Thomas, 88447 Warthausen (DE)
(74) Vertreter: Schmidt-Evers, Jürgen

(56) Entgegenhaltungen:
- CH-A- 598 803
- US-A- 5 040 980
- US-A- 5 571 013

## Beschreibung

Die Erfindung betrifft ein medizinisches; insbesondere dentalmedizinisches Handstück gemäß dem Oberbegriff des Anspruches 1.

Handstücke der hier betrachteten Art erzeugen - insbesondere wenn es sich um Turbinenhandstücke handelt - Umdrehungsgeschwindigkeiten für das Werkzeug bis zu 400.000 min⁻¹ und bei neuartigen Konstruktionen auch bis zu 500.000 min⁻¹ (Umdrehungen pro Minute). Bei derartigen Umdrehungsgeschwindigkeiten können die Lager unerwünschte Geräusche entwickeln, wenn die Lagerrillen in den Innenlagerelementen und den Außenlagerelementen nicht genau zueinander justiert sind oder die sich drehenden Elemente nicht ausgewuchtet sind. Die vorgenannten Mängel führen im Betrieb des Handstücks auch zu einem vorzeitigen Verschleiß, was unerwünscht ist.

Bei einem bekannten dentalen Turbinenhandstück (US 3,376,084 McKee) ist eine durchgehende Trägerhülse vorgesehen, in die eine Spannhülse eingeschraubt ist. Auf der Außenseite der Trägerhülse befindet sich in deren mittlerem Bereich ein Turbinenrotor, der fest auf der Trägerhülse sitzt. Zu beiden Seiten des Turbinenrotors weist die Trägerhülse Laufrillen für die Kugel von zwei Kugellagern auf. Die Kugeln werden durch Kugelkäfige auf Abstand gehalten und laufen außen in zwei zu beiden Seiten des Turbinenrotors angeordneten Außenringen, die an ihren Innenseiten mit entsprechenden Laufrillen versehen sind. Die Außenringe sind fest in dem Gehäuse des Turbinenkopfes angeordnet und werden durch eine dünne Hülse in axialer Richtung derart auf Abstand gehalten und positioniert, daß die inneren und äußeren Laufringe exakt einander gegenüberliegen und dadurch störende Lagergeräusche, insbesondere bei hohen Geschwindigkeiten vermieden werden.

Bei einem weiteren bekannten dentalen Turbinenhandstück (US 5,040,980 Heil) befinden sich die inneren Laufringe für die Kugellager an den Außenseiten von zwei separaten Außenlagerringen, die - ebenso wie der Turbinenrotor - auf die Trägerhülse aufgeschoben und dort fixiert sind. Auch hier befindet sich innerhalb der Trägerhülse - direkt an dieser anliegend - eine Spannhülse. Die beiden Lagerinnenringe verjüngen sich an ihren Außenseiten gegen die axialen Enden hin, um die Montage der normalerweise in Käfigen sitzenden Kugel-Anordnungen zu erleichtern.

Ein weiterhin bekanntes dentales Turbinenhandstück (US 5,571,013 Novak) unterscheidet sich von dem bekannten Turbinenhandstück McKee dadurch, daß die Trägerhülse außen zu beiden Enden hin konisch verläuft und gegenüber dem bekannten Turbinenhandstück Heil dadurch, daß die Trägerhülse und die Innenlagerringe sowie ein dazwischen liegender Teil (auf den der Turbinenrotor aufgeschoben wird) einstückig ausgebildet sind.

Allen Handstücken der hier betrachteten Art ist gemeinsam, daß das Antriebselement, insbesondere wenn es sich dabei um einen schnell laufenden Turbinenrotor handelt, vor dem Einsatz des Handstücks ausgewuchtet werden muß, um einen guten Rundlauf zu gewährleisten und störende Geräusche zu vermeiden. Dieses Auswuchten ist ein zeitaufwendiger und im Hinblick auf die geringen Abmessungen der Elemente mit Präzisionsarbeit verbundener Vorgang, der am besten von der Herstellerfirma durchgeführt wird.

Ferner offenbart die CH 598 803 A ein Handstücks gemäß dem Oberbegriff Anspruchs.

Während das Antriebselement (insbesondere, wenn dieses ein Turbinenrotor ist) im Betrieb des Handstückes praktisch keinem Verschleiß ausgesetzt ist, gilt dies nicht für die Lagerelemente und für die Spannhülse. Letztere müssen u. U. während der Lebenszeit eines Handstückes gewechselt werden. Die entsprechenden Reparaturarbeiten sollen dabei in möglichst kurzer Zeit durchgeführt werden können. Bei den bisher bekannten Handstücken kann bei dieser Vorgabe nur die komplette Einheit aus Trägerhülse, Antriebselement (z. B. Turbinenrad), Lagerelementen und Spannhülse ausgetauscht werden.

Der Erfindung liegt die Aufgabe zugrunde, eine Konstruktion für ein Handstück der hier betrachteten Art anzugeben, die es erlaubt, daß im Reparaturfall sowohl nur die Lagereinheit als auch nur das Spannsystem gewechselt werden kann.

Die erfindungsgemäße Lösung besteht darin, daß die Innenlagerelemente von einer einstückigen Innenlagerhülse gebildet sind, die lösbar auf der Trägerhülse befestigt ist und das Antriebselement trägt. Ferner weist die Trägerhülse erfindungsgemäß ein radial abstehende Schulter auf, an der die Innenlagerhülse anliegt.

Die Reparatur des erfindungsgemäßen Handstücks erfolgt folgendermaßen. Auch hier wird zunächst die Gesamtheit aus Trägerhülse, Innenlagerhülse, Antriebselement (z. B. Turbinenrotor) und Spannhülse aus dem Gehäusekopf des Handstückes entnommen. Dann werden die Innenlagerhülse mit dem darauf befindlichen Antriebselement einerseits und die Trägerhülse mit der darin befindlichen Spannhülse andererseits voneinander getrennt. Auf diese Weise entstehen zwei Untereinheiten, und zwar zum einen die Lagereinheit und zum anderen die Spanneinheit. Die beschädigte Untereinheit wird gegen eine auf Lager befindliche neue Untereinheit ausgetauscht. Danach werden die beiden Untereinheiten wieder zusammengefügt und in das Handstück eingebaut. In keinem Fall ist hier ein erneutes Auswuchten im Reparaturbetrieb erforderlich. Wenn die Innenlagerhülse mit dem darauf befindlichen Antriebselement ausgetauscht werden muß, so ist die zum Austausch bereite Lagereinheit bereits ausgewuchtet, d. h. sie wird von der Herstellerfirma im ausgewuchteten Zustand geliefert bzw. bereitgestellt. Dies gilt auch für die Untereinheit aus der Trägerhülse und der Spannhülse.

Unter dem gleichen Aspekt ist es von Vorteil, daß die ein Verschleißteil bildende Spannhülse nicht allein zum Austausch zur Verfügung steht, sondern nur in Verbindung mit der Trägerhülse, in die sie eingebaut ist. Die Spannhülse ist wegen der Schlitze und gegebenenfalls auch wegen ihrer äußeren konischen Form kein rotationssymmetrisches Teil. Ihr Einbau vor Ort würde daher ebenfalls zu der Notwendigkeit führen, daß am Ort der Reparatur erneut ausgewuchtet werden muß. Diese Notwendigkeit entfällt, weil die Trägerhülse ein exakt in die Innenlagerhülse passendes rotationssymmetrisches Teil darstellt, das als Lagereinheit zusammen mit der Spannhülse in der Herstellerfirma vor-ausgewuchtet worden ist.

Die bei dem erfindungsgemäßen Handstück verwendete einstückige Innenlagerhülse hat weiterhin den Vorteil der präzise zueinander geschliffenen Kugellaufbahnen. Außerdem bestehen zwischen der Innenlagerhülse und dem Antriebselement Paßflächen, die eine genaue Positionierung des Antriebselements ermöglichen. Es ist deshalb möglich, ein ausgewuchtetes Antriebselement auf der Innenlagerhülse zu positionieren, ohne daß mit einer wesentlichen Unwucht zu rechnen ist. Es ist aber auch möglich, die Innenlagerhülse und das darauf montierte Antriebselement vorauszuwuchten und als Untereinheit für eine Reparatur zur Verfügung zu stellen.

Das notwendige Fixieren der einstückigen Innenlagerhülse auf der Trägerhülse erfolgt beispielsweise durch eine Klebung oder durch einen Längspressverbund.

Eine weitere vorteilhafte Ausgestaltung des erfindungsgemäßen Handstücks kann darin bestehen, daß die Außenseiten der beiden Endbereiche der einstückigen Innenlagerhülse zum Ende hin konisch verlaufen, um das Aufbringen der mit Kugeln beladenen Kugelkäfige zu erleichtern. Um die Kugelringe auf der einstückigen Innenlagerhülse axial zu fixieren, kann die Innenlagerhülse mit Laufrillen versehen sein, wobei jede Laufrille mit dementsprechendem konischen Endbereich eine kleine radiale Erhöhung bildet, die ein Weggleiten der Kugelringe verhindert. Die erwähnte Erhöhung sollte einen Durchmesser haben, der - im Schnitt durch die Innenlagerhülse gesehen - größer als der Durchmesser im Rinnengrund ist.

Eine andere Möglichkeit zur Erleichterung des Aufbringens der von Käfigen mit Kugeln gebildeten Kugelringe auf die Innenlagerhülse kann darin bestehen, daß die Außenlagerringe an den entsprechenden inneren Endbereichen zum Ende der Innenlagerhülse hin konisch aufgeweitet sind. Auch hier zwischen dem konischen Bereich und einer entsprechend vorgesehenen Laufrille eine kleine Erhöhung liegen, die ein Herausgleiten des Kugelringes aus der Laufrille in axialer Richtung verhindert. Dabei sollte der Durchmesser der Erhöhung gering als der Durchmesser am Rillengrund sein.

Während die aus den Wälzkörpern und dem zugehörigen Käfig bestehende Einheit beim Aufbringen auf die Innenlagerhülse durch Verschieben in axialer Richtung im erstgenannten Falle vergrößert wird, wird sie im zweitgenannten Falle verkleinert.

Die an der Außenseite der Innenlagerhülse oder an der Innenseite der Innenlagerringe vorgesehenen konischen Abschnitte können linear ansteigen oder auch von einer Hohlkehle gebildet sein.

Nachfolgend werden die Erfindung und weitere durch sie erzielbare Vorteile anhand von vorteilhaften Ausgestaltungen eines bevorzugten Beispiels näher erläutert. Es zeigt:
- Fig. 1: ein erfindungsgemäßes dentalmedizinisches Behandlungsinstrument mit einem Handstück in der Seitenansicht;
- Fig. 2: eine im Handstückkopf des Handstücks angeordnete Drehlageranordnung für eine Aufnahmehülse zur Aufnahme des Werkzeugs im axialen Schnitt und in vergrößerter Darstellung;

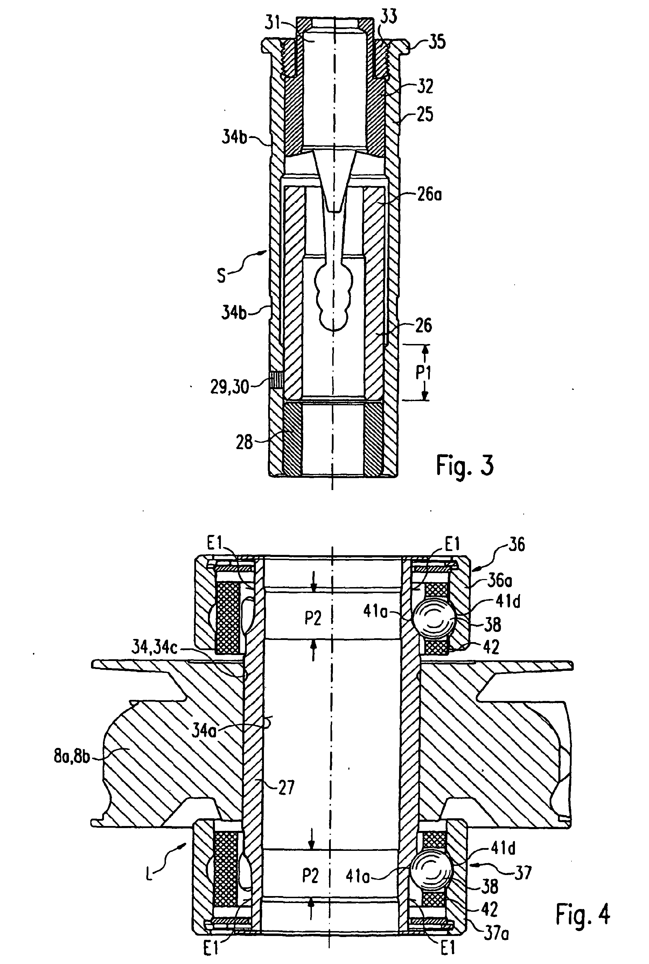

- Fig. 3: eine erste Untereinheit in Form einer Spanneinheit der Aufnahmehülse im axialen Schnitt;
- Fig. 4: eine zweite Untereinheit in Form einer Lagereinheit der Aufnahmehülse im axialen Schnitt;

- Fig. 5: einen Teil einer Lagereinheit mit einer Innenlagerhülse im axialen Teilschnitt und in etwas vergrößerter Darstellung;
- Fig. 6: die Innenlagerhülse nach Fig. 5 in der Seitenansicht;
- Fig. 7: eine in Fig. 6 mit X gekennzeichnete Einzelheit in vergrößerter Darstellung;
- Fig. 8: eine Lagereinheit im axialen Schnitt in abgewandelter Ausgestaltung;
- Fig. 9: einen Handstückkopf im axialen Schnitt in abgewandelter Ausgestaltung;
- Fig. 10: einen Handstückkopf im axialen Schnitt in weiter abgewandelter Ausgestaltung;
- Fig. 11: eine Lagereinheit des Handstückkopfes nach Fig. 10 im axialen Teilschnitt;
- Fig. 12: eine erste Untereinheit in Form einer Spanneinheit der Aufnahmehülse im axialen Schnitt und in abgewandelter Ausgestaltung.

Die Hauptteile des allgemein mit 1 bezeichneten Behandlungsinstruments sind ein das hintere Ende des Behandlungsinstruments 1 bildendes Anschlußteil 2, das Handstück 3, das durch eine Schnellkupplung 4 in Form einer Steckkupplung, insbesondere einer Steck/Drehkupplung, mit dem Anschlußteil 2 lösbar verbunden ist und im gekuppelten Zustand sich in Form eines stabförmigen Griffteils vom Anschlußteil 2 nach vorne erstreckt, eine im vorderen Endbereich des Handstücks 3 angeordnete Haltevorrichtung 5 für ein Behandlungs- oder Bearbeitungswerkzeug 6, und ein Antriebsmotor 7, der im Bereich des Anschlußteils 2 oder im Bereich des Handstücks 3 angeordnet sein kann und beim vorliegenden Ausführungsbeispiel durch eine im vorderen Endbereich des Handstücks 3 integrierte Turbine 8 gebildet ist, wie es bei sogenannten Turbinenhandstücken an sich bekannt ist.

Wenn der Antriebsmotor 7 sich im Anschlußteil 2 befindet (nicht dargestellt), ist im Handstück 3 eine Antriebswelle drehbar gelagert, die im mit dem Anschlußteil 2 gekuppelten Zustand des Handstücks 3 durch eine Steckkupplung mit dem Antriebsmotor in Antriebsverbindung steht, und die durch ein Entfernen des Handstücks 3 vom Anschlußteil 2 selbsttätig gelöst wird. Das vordere Ende der Antriebswelle ist mit einer Aufnahmehülse 11 antriebsmäßig verbunden, in die das Bearbeitungswerkzeug 6 drehfest und axial positioniert einsteckbar ist. Für den Drehantrieb der Aufnahmehülse 11 ist auf ihr ein Antriebselement 8a angeordnet, das bei einer Antriebswelle durch ein Ritzel und bei einer Turbine 8 durch ein Turbinenrad 8b gebildet ist.

Beim vorliegenden Ausführungsbeispiel, bei dem eine Turbine 8 vorgesehen ist, erstreckt sich längs durch das Behandlungsinstrument 1 eine Druckluftleitung 9 zur Turbine 8 und gegebenenfalls auch eine nicht dargestellte Abführleitung für verbrauchte Druckluft, was weiter unten noch beschrieben wird. Die Haltevorrichtung 5 ist durch die Aufnahmehülse 11 gebildet, auf der das Turbinenrad der Turbine 8 sitzt und die drehbar im vorzugsweise verdickten Handstückkopf 12 des Handstücks 2 gelagert ist. Die Aufnahmehülse 11 ist an ihrem einen Ende offen, wodurch eine Einstecköffnung 13 für einen Schaft 6a des Bearbeitungswerkzeugs 6 gebildet ist, dessen abrasiver oder mit Schneidkanten versehener Bearbeitungsabschnitt mit 6b bezeichnet ist. Der den Handstückkopf 12 aufweisende vordere Griffteilabschnitt ist zu einer Seite 14 des Handstücks 3 hin abgewinkelt angeordnet, wobei der spitze Winkel W1 im Winkelbereich zwischen 10 ° und 28 ° liegt, vorzugsweise etwa 19 ° beträgt. Das Bearbeitungswerkzeug 6 ist von der gegenüberliegenden Seite 15 des Handstücks 3 her in die Aufnahmehülse 11 einsteckbar, wobei es beim Einstecken selbsttätig drehfest mit der Aufnahmehülse 11 verbunden und darin axial gegen eine unbeabsichtigte Entnahme positioniert wird. Zum Lösen des Bearbeitungswerkzeugs 6 kann auf der der Einstecköffnung 13 gegenüberliegenden Seite 14 des Handstückkopfes 12 ein Betätigungselement 16 angeordnet sein, bei dessen manueller Verschiebung gegen den Handstückkopf 12 die axiale Positionierung in der Aufnahmehülse 11 gelöst wird, so daß das Werkzeug 6 axial zur Seite 15 hin herausgezogen werden kann.

Der zwischen der Längsmittelachse 3c des Handstücks 3 und der Längsmittelachse 5a der Haltevorrichtung 5 eingeschlossene Winkel W2 kann ein rechter Winkel oder ein stumpfer Winkel sein, der 95° bis 110°, insbesondere etwa 100° bis 105°, beträgt.

Durch die Schnellkupplung 4 wird die Handhabbarkeit des Handstücks 3 wesentlich verbessert, weil das Anschlußteil 2 an Drehbewegungen des Handstücks 3 während der Behandlung bzw. Bearbeitung nicht teilzunehmen braucht und deshalb ein Drehausgleich stattfinden kann. Die Steck/Drehkupplung weist einen hohlzylindrischen Kupplungszapfen 4a am einen Kupplungsteil und eine den Kupplungszapfen 4a mit geringem Bewegungsspiel aufnehmende Kupplungsausnehmung 4b auf. Bei der vorliegenden Ausgestaltung erstreckt sich der Kupplungszapfen 4a vom Anschlußteil 2 nach vorne und die Kupplungsausnehmung 4b ist im hinteren Endbereich des Handstücks 3 angeordnet. Zur lösbaren Positionierung der Steckkupplung in der Kupplungsstellung dient eine manuell überdrückbare Verrastungsvorrichtung 18 mit einem quer bewegbar gelagerten Verrastungselement 18a, das in einer Ausnehmung in der Außenmantelfläche des Steckzapfens 4a oder in der Innenmantelfläche der Steckausnehmung 4b angeordnet ist und durch eine elastische Federkraft in eine im jeweils gegenüberliegenden anderen Teil angeordnete Verrastungsausnehmung so hineingedrückt wird, daß das Verrastungselement 18a ausfedern kann und die Verrastungsvorrichtung 18 durch eine axial gerichtete und manuell leicht aufbringbare Zugkraft überdrückbar ist.

Das Anschlußteil 2 ist durch eine mit ihm verbundene, andeutungsweise dargestellte flexible Versorgungsleitung 19, insbesondere durch einen flexiblen Versorgungsschlauch, mit einem nicht dargestellten Steuergerät verbunden, wie es bei einem medizinischen oder dentalmedizinischen Behandlungsplatz an sich bekannt ist. Durch die Versorgungsleitung 19 und durch das Behandlungsinstrument 1 erstreckt sich die Druckluftleitung 9 und kann sich wenigstens eine weitere Mediumleitung, z. B. für Licht, Luft, Wasser und/oder Spray, erstrecken, die sich so durch die Steck/Drehkupplung 4 erstrecken, daß der Durchgang in der oder den Mediumleitungen in jeder Drehstellung gewährleistet ist. Die wenigstens eine Mediumleitung 9, kann die Teilungsfuge 21 zwischen dem Steckzapfen 4a und der Steckausnehmung 4b Z-förmig in einer Ringnut durchsetzen, wobei der die Teilungsfuge 21 radial durchsetzende Abschnitt der Mediumleitung 9, durch zu beiden Seiten der Ringnut 22 angeordnete Dichtringe 23 abgedichtet ist, die in einer Außenringnut des Steckzapfens 4a oder in einer Innenringnut der Steckausnehmung 4b angeordnet sind.

Die Aufnahmehülse 11 besteht aus mehreren radial aufeinander und dabei koaxial angeordneten Teilen, nämlich einer mittleren Trägerhülse 25, einer darin angeordneten Spannhülse 26 und einer auf der Trägerhülse 25 angeordneten Innenlagerhülse 27. Diese Teile sitzen mit zylindrischen bzw. hohlzylindrischen Paßflächen aufeinander. Die Spannhülse 26 ist axial in die Trägerhülse 25 eingeschoben, vorzugsweise von dem Ende her, auf der sich die Einstecköffnung 13 für das angedeutete Werkzeug 6 befindet, die in der in den Figuren dargestellten Anordnung unten in einer Zwischenhülse 28 angeordnet ist, die unterhalb der Spannhülse 26 in der Trägerhülse 25 angeordnet und befestigt ist. Die Spannhülse 26 ist bei diesem Ausführungsbeispiel nur in ihrem unteren Bereich mit zylindrischen Paßflächen P1 passend in der Trägerhülse 25 angeordnet und fixiert, z. B. durch eine die Spannhülse 26 mit der Trägerhülse 25 verbindende Schweißstelle 29, die im Bereich eines radialen Loches 30 in der Trägerhülse 25 von außen gefertigt ist, insbesondere eine Laserschweißung. Es können mehrere Schweißstellen 29 in Löchern 30 auf dem Umfang verteilt angeordnet sein. Der obere Längsbereich der Spannhülse 26 ist durch Spannsegmente 26a gebildet, die einen radialen Abstand von der Innenmantelfläche der Trägerhülse 25 aufweisen und zur Lösung eines zwischen die Spannsegmente 26a eingeschobenen Werkzeugs 6 durch einen im oberen Bereich angeordneten Lösekeil 31 zur Lösung des Werkzeugs spreizbar sind, wenn der Lösekeil 31 durch eine manuelle Druckausübung auf das Betätigungselement 16 nach unten verschoben wird. Er kehrt selbsttätig wieder in seine nach oben verschobene Freigabestellung zurück.

Der Lösekeil 31 ist in einer Lagerbuchse 32 koaxial verschiebbar gelagert, die oberhalb der Spannhülse 26 in der Trägerhülse 25 sitzt und z. B. durch eine Ringmutter 33 verschraubt ist, die in einer Ringausnehmung der Lagerbuchse 32 sitzt und mit ihrem Außengewinde in die Trägerhülse 25 eingeschraubt ist.

Die Innenlagerhülse 27 sitzt auf der Trägerhülse 25, und sie ist zu ihrer Fixierung durch einen Preßverbund mit der Trägerhülse 25 lösbar verbunden oder damit lösbar verklebt. Dabei sitzen die Innenlagerhülse 27 und die Trägerhülse 25 mit Paßflächen P2 radial aufeinander, die sich in den axialen Endbereichen dieser Teile befinden und in der Innenlagerhülse 27 mit Paßflächen P2 verdeutlicht sind. Hierdurch erhalten die Innenlagerhülse 27 und die Trägerhülse 25 eine genaue und stabile koaxiale Positionierung gegeneinander.

Es können zwischen der Trägerhülse 25 und der Innenlagerhülse 27 ein oder mehrere Ringspalte 34 angeordnet sein, in denen sich ein Kleber für eine Klebverbindung befindet. Der wenigstens eine Ringspalt 34 ist deshalb vorteilhaft, weil sich beim Fehlen des Ringspaltes 34 ein aufgetragener Kleber beim koaxialen Zusammenschieben dieser Teile wegschieben könnte. Beim Ausführungsbeispiel ist in der Innenlagerhülse 27 zwischen den Paßflächen P2 eine Ringnut 34a angeordnet, die sich über die Breite des Antriebselements 8a, hier eines Turbinenrades 8b, erstreckt. Es können auch nur oder zusätzlich in der Außenmantelfläche der Trägerhülse 25 eine oder mehrere Ringnuten 34b angeordnet sein, die ein oder mehrere Ringspalte für den Kleber ergeben. Beim Ausführungsbeispiel befindet sich der oder die Ringspalte 34b in der Trägerhülse 25 in der Einbauposition im Bereich der axial verhältnismäßig langen Ringnut 34a, so daß ein in den Ringnuten 34a, 34b erstarrender Kleber nicht nur aufgrund seiner Verklebung, sondern auch formschlüssig eine axiale Sicherung dieser Teile gegeneinander bewirkt.

Beim vorliegenden Ausführungsbeispiel weist die Trägerhülse 25 an ihrem der Einstecköffnung 13 abgewandten Ende, hier an ihrem oberen Ende, einen Flansch 35 auf, der eine mittelbare oder unmittelbare axiale Begrenzung für die Innenlagerhülse 27 bildet, die in diesem Falle von unten auf die Trägerhülse 25 aufgeschoben wird bzw. die Trägerhülse 25 von oben in die Innenlagerhülse 27 eingeschoben wird.

Auf der Innenlagerhülse 27 sitzt in einem mittleren Längsbereich das Antriebselement 8a, hier das Turbinenrad 8b, im Bereich eines Passflächenabschnitts P3, wobei auch das Antriebselement 8a durch einen lösbaren oder unlösbaren Preßverbund oder durch eine lösbare oder unlösbare Verklebung mit der Innenlagerhülse 27 verbunden sein kann. Im letzteren Verbindungsfalle ist auch zwischen der Innenmantelfläche des Antriebselements 8a und der Außenmantelfläche der Innenlagerhülse 27 wenigstens ein Ringspalt für den Kleber angeordnet, der z. B. durch eine Außenringnut 34c in der Außenmantelfläche der Innenlagerhülse 27 gebildet sein kann. Im Bereich ihrer Paßfläche P3 ist die Innenlagerhülse 27 im Querschnitt etwas größer ausgebildet als in ihren axial benachbarten Bereichen. Beim Aufschieben des Antriebselements 8a erfolgt deshalb eine Gleitbeanspruchung nur im Bereich der Paßflächen P3.

Die in ihrer Gesamtheit mit Spanneinheit S bezeichnete erste Untereinheit und die in ihrer Gesamtheit mit Lagereinheit L bezeichnete zweite Untereinheit der Aufnahmehülse 11 sind vorgefertigte Teile, die passgenau montiert und z.B. vor dieser Montage jeweils einzeln ausgewuchtet worden sind oder nach dieser Montage gemeinsam ausgewuchtet worden sind und bereitgestellt werden, was insbesondere bei hochtourigen Handstücken, insbesondere Turbinenhandstücken, wichtig ist.

Im Falle eines Reparaturaustausches der Spanneinheit S oder der Lagereinheit L braucht deshalb nur eine dieser Einheiten ausgetauscht zu werden. Hierzu wird die Aufnahmehülse 11 in die beiden Einheiten zerlegt, und die reparaturbedürftige Einheit ersetzt und montiert.

Insbesondere bezüglich der Lagereinheit L ist zu bemerken, daß bei dieser aufgrund der günstigen Anordnung und Position der Paßflächen P2 nach dem Zusammensetzen dieser Einheiten L, S ein gemeinsames Auswuchten nicht erforderlich ist. Sie können im Rahmen der Erfindung aber gemeinsam ausgewuchtet sein.

Bei der Spanneinheit S ist es dagegen aufgrund der einseitigen Halterung der Spannhülse 26 im Bereich der Paßflächen P1 vorteilhaft, daß diese Einheit S gemeinsam, d. h. mit Trägerhülse 25 und Spannhülse 26, auszuwuchten, wodurch sich eine genau ausgewuchtete Spanneinheit S ergibt.

Es ist deshalb im Reparaturfall kein Auswuchten erforderlich. Bei einem Austausch der Spanneinheit S kann auf eine genau ausgewuchtete Einheit S zurückgegriffen werden, und beim Austausch einer Lagereinheit L ist kein Auswuchten erforderlich.

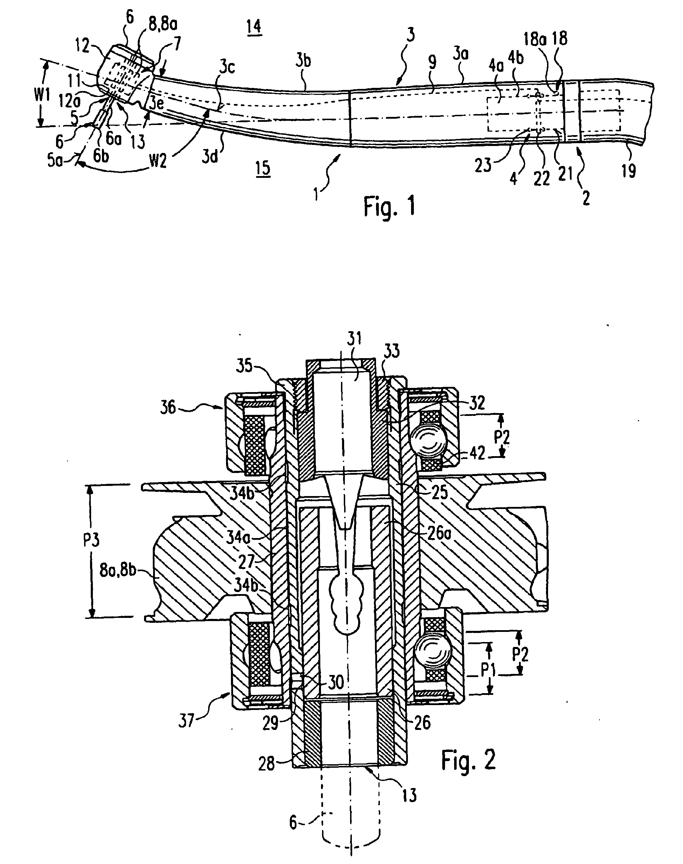

Die Aufnahmehülse 11 ist durch zwei auf beiden Seiten des Antriebselements 8a, nämlich über und unter diesem, angeordnete Wälzlager 36, 37 im Handstückkopf 12 drehbar gelagert. Die Außenringe 36a, 37a der Wälzlager 36, 37 sitzen radial und axial positioniert in einer in Fig. 1 nicht dargestellten Lagerbohrung im Handstückkopf 12. Für die Wälzkörper 38 der Wälzlager sind Außenlagerelemente und Innenlagerelemente in Form von äußeren und inneren Laufrillen 41a, 41b in den Außenringen 36a, 37a und in der Innenlagerhülse 27 passend angeordnet. Die Innenlagerhülse 27 bildet somit eine einteilige, sich axial über beide Wälzlager 36, 37 erstreckende gemeinsame Innenlagerhülse für beide Wälzlager 36, 37. Die Laufrillen 41a in der Außenmantelfläche der Innenlagerhülse 27 sind axial nach innen durch die gekrümmten Laufrillen-Schulterflächen begrenzt und axial nach außen offen, so daß die in einem Käfig 42 positionierten und vorzugsweise aus Keramikmaterial bestehenden Wälzkörper 38 als Ring von außen auf die Innenlagerhülse 27 aufgeschoben und montiert werden können. Der bezüglich der Laufrille 41a außen gelegene Mantelflächenabschnitt der Innenlagerhülse 27 ist als Einführungsfläche E1 ausgebildet, die die Wälzkörper 38 beim axialen Aufschieben selbsttätig in die zugehörigen Laufrille 41a führt.

Um das axiale Aufschieben zu erleichtern, ist jeweils der bezüglich der Laufrille 41a außen gelegene Längsabschnitt c der Einführungsfläche E1 im Durchmesser d1 etwas kleiner als der Durchmesser d2 der Laufrille 41a.

Vorzugsweise kann jedoch außen neben der Laufrille 41a eine kleine radiale Erhöhung d3, z. B. ein Ringwulst 43, auf der Innenlagerhülse 27 angeordnet sein, der radial nur so groß ist, daß er beim Aufschieben der Wälzkörper 38 mit dem zugehörigen Außenring und dem Käfig 42 eine Klemmwirkung und somit einen axialen Widerstand auf die Wälzkörper 38 ausübt, der durch einen manuellen axialen Druck beim Aufschieben überdrückbar ist. Hierdurch erhält die aus den Wälzkörpern 38, dem Käfig 42 und dem zugehörigen Außenring bestehende Lagerkörpereinheit eine axiale Sicherung gegen eine unbeabsichtigte Entfernung von der Innenlagerhülse 27. Hierdurch ist diese Lagerkörpereinheit unverlierbar in der zugehörigen Laufrille 41a gehalten. Im Falle einer gewollten Entfernung dieser Lagerkörpereinheit kann sie natürlich durch eine manuelle Kraftausübung beim Herunterschieben überwunden werden. Durch den vorbeschriebenen axialen Widerstand der Erhöhung d3 wird somit eine Barriere geschaffen, die durch eine manuelle axiale Kraftausübung überwunden werden kann.

Im anderen Endbereich der Innenlagerhülse 27 ist eine solche axiale Sicherung für jene Lagerkörpereinheit des anderen Wälzlagers bezüglich einer mittleren Querebene spiegelbildlich ausgebildet.

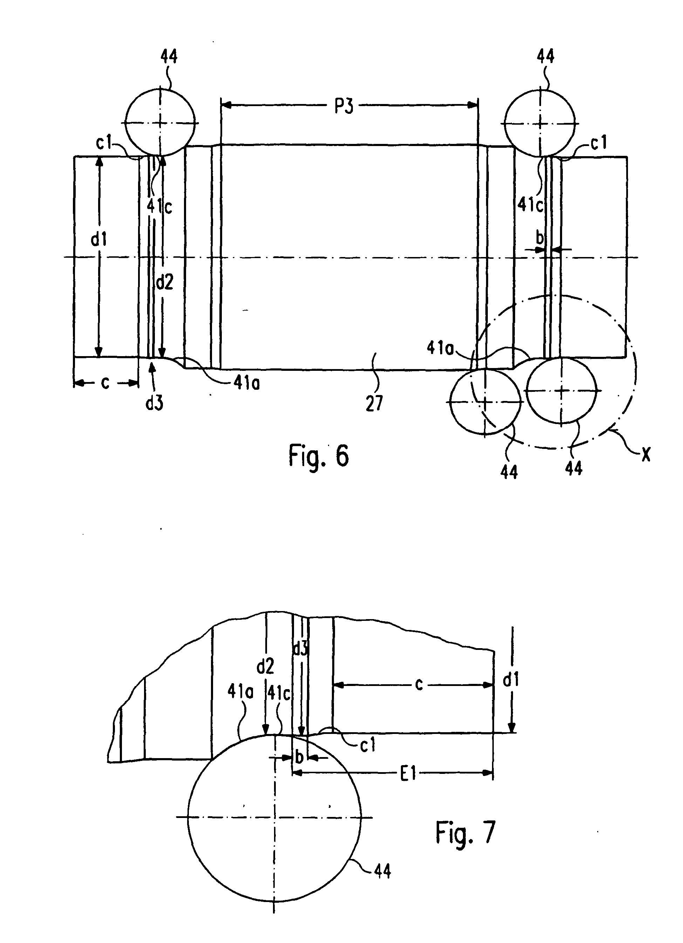

Wie Fig. 6 und 7 zeigen, wird die Erhöhung d3 beim Schleifen der Laufrillen 41 und der Längsabschnitte c dadurch gebildet, daß der Schleifkörper 44, dessen Größe und Form, der Größe und Form der Wälzkörper 38 entspricht, nicht axial zum zugehörigen Ende der Innenlagerhülse 27 bewegt wird, sondern radial nach außen bewegt wird, wodurch ein zum zugehörigen Hülsenende hin divergenter Laufrillenabschnitt 41c geschaffen wird.

Andererseits wird beim axialen Vorschub beim Schleifen des Längsabschnitts c der Schleifkörper 44 nur soweit zur zugehörigen Laufrille 41 a hin geschoben, dass ein zur Laufrille 41 a hin divergenter Bogenabschnitt c 1 am oder in einem kleinen axialen Abstand b vom Laufrillenabschnitt 41c endet.

Die vorbeschriebene Einführungsfläche E1 ist somit stufenförmig ausgebildet, insbesondere was die Durchmesser d1 und d2 betrifft. Im Rahmen der Erfindung kann die Einführungsfläche E1 auch nach außen konvergent kegelförmig und somit mit einer kontinuierlichen Steigerung ausgebildet sein, wobei eine solche Kegelfläche in den Durchmesser d2 der 41 a oder in den Durchmesser d3 der radialen Erhöhung ausläuft.

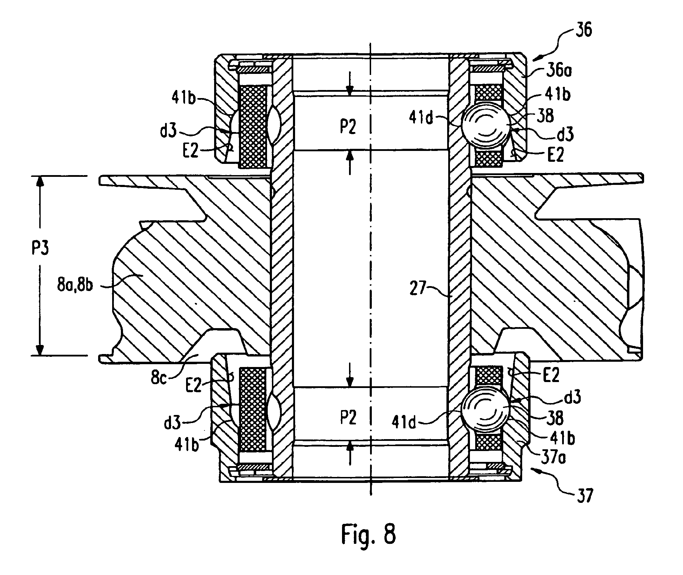

Die Wälzlager 36, 37 können alternativ so ausgebildet sein, daß die hier mit E2 bezeichneten Einführungsflächen nicht an der Außenmantelfläche der Innenlagerhülse 27, sondern an der Innenmantelfläche der Außenringe 36a, 37a ausgebildet sind, was in Fig. 8 dargestellt ist. Bei dieser Ausgestaltung sind die Laufrillen 41b innenseitig so ausgebildet, daß die Wälzkörper 38 axial in die Laufrillen 41b einführbar sind. Bei dieser Ausgestaltung sind die Laufrillen 41b jedoch in die andere Achsrichtung offen, nämlich vom zugehörigen Ende der Innenlagerhülse 27 nach innen offen. Bei dieser Ausgestaltung werden zunächst die Wälzkörper 38 mit dem Käfig 42 in der beidseitig geschlossenen Laufrille 41d in der Innenlagerhülse 27 angeordnet und dann wird der Außenring 36a bzw. 37a vom jeweils zugehörigen Ende der Innenlagerhülse 27 her aufgeschoben.

Um dabei zunächst ein leichtes Schieben des zugehörigen Außenringes 36a, 37a zu gewährleisten, sind die Einführungsflächen E2 bezüglich des Außenringes 36a, 37a nach außen kegelförmig divergent und bezüglich der radial gegenüberliegenden Laufrille 41a zur Mitte der Innenlagerhülse 27 hin divergent.

Im Rahmen der Erfindung können die Einführungsflächen E2 prinzipiell wie die Einführungsflächen E1, nämlich zylindrisch stufenförmig divergent, oder die Einführungsflächen E1 kegelförmig divergent ausgebildet sein.

Auch bei der gemäß Fig. 8 kann eine radiale Erhöhung d3 in der Einführungsfläche E2 vorhanden sein, die jedoch nicht durch eine Vergrößerung der Querschnittsabmessung, sondern durch eine Verringerung der Querschnittsabmessung gebildet ist, jedoch die gleiche Funktion im Sinne eines axial überdrückbaren Widerstandes beim Einschieben der durch den Käfig 42 positionierten Wälzkörper 38 hat. Dabei können auch in den Einführungsflächen E2 der divergente Laufrillenabschnitt 41 c und Bogenabschnitt c 1 entsprechend geschliffen werden.

In beiden vorbeschriebenen Fällen führt eine radiale Erhöhung d3 auch zu einer Vergrößerung der Lauffläche der Laufrillen 41a, 41b und somit zu einer Verlängerung der Lebensdauer der Wälzlager 36, 37.

In dem Falle, in dem wenigstens eine Laufrille 41 a an der Innenlagerhülse 27 axial offen ist, ist die radial gegenüberliegende Laufrille am zugehörigen Außenring 36a, 37a eine übliche Laufrille 41d, die an beiden Seiten geschlossen ist. Dies gilt auch für die alternative Ausgestaltung, bei der die Laufrille 41b in wenigstens einem Außenring 36a, 37a an einer Seite offen ist. In diesem Falle ist die radial gegenüberliegende Laufrille an der Innenlagerhülse 27 eine übliche Laufrille 41d, die axial an beiden Seiten geschlossen ist.

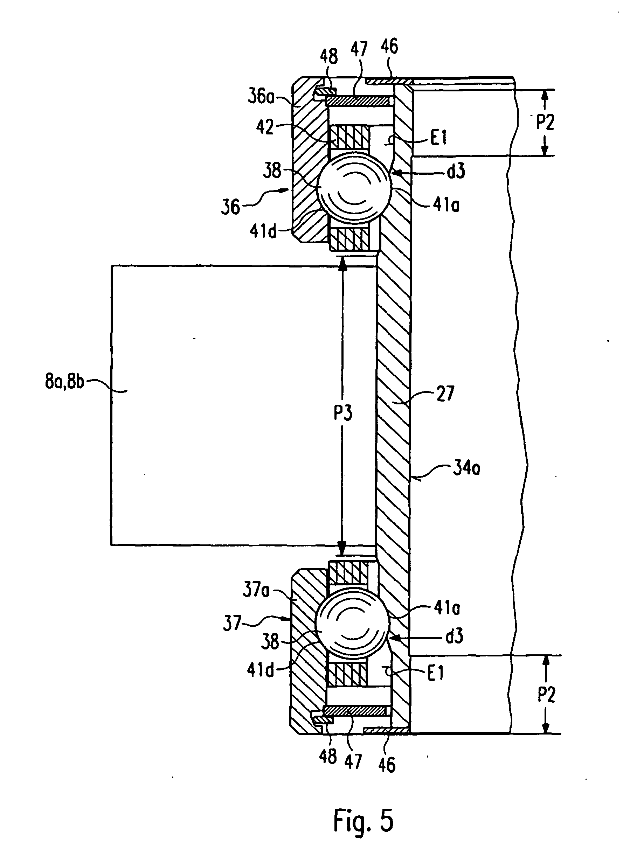

Bei den vorbeschriebenen Ausführungsbeispielen weisen die Wälzlager 36, 37 im Bereich ihrer einander abgewandten Außenseiten jeweils zwei Sperringe 46, 47 auf, die einander in radialer Richtung überlappend angeordnet sind, wobei der eine Sperring 46 an der Innenlagerhülse 27 befestigt ist und der andere Sperring 47 am zugehörigen Außenring 36a, 37a befestigt ist wie es am besten aus Fig. 5 zu entnehmen ist. Die Sperrringe 46, 47 bilden eine Barriere gegen Verunreinigungen und somit eine Schutzvorrichtung. Beim Ausführungsbeispiel ist der innere Sperring 46 an der zugehörigen Stirnseite der Innenlagerhülse 27 befestigt, z. B. durch Punktschweißen oder Kleben. Der äußere Sperring 47 ist innenseitig vom inneren Sperring 46 angeordnet, wobei er in einer Ringnut in der Innenmantelfläche des Außenringes 36a, 37a sitzt und durch einen in die gleiche oder eine parallele Innennut eingesetzten Federring 48 gesichert ist.

Die Sperringe 46, 47 müssen nicht vorhanden sein. Wenn sie vorhanden sind, wie es beim Ausführungsbeispiel der Fall ist, können sie nach der Montage der Wälzlager 36, 37 montiert werden. Wenn der innere Sperring 46 unlösbar befestigt ist, kann er nach der Montage der Wälzlager 36, 37 befestigt werden. Vor einer Demontage ist wenigstens der innere Sperring 46 zu entfernen.

Bei allen vorbeschriebenen Ausführungsbeispielen kann einer der beiden Außenringe, hier der Außenring 37a, bezüglich dem Antriebselement 8a axial geringfügig überlappend angeordnet sein. Um dies zu ermöglichen, ist im Antriebselement 8a im Bereich des Außenringes 37a eine Ringnut 8c angeordnet, in deren Bereich der Wälzlagerring 37a das Antriebselement 8a geringfügig überlappen kann.

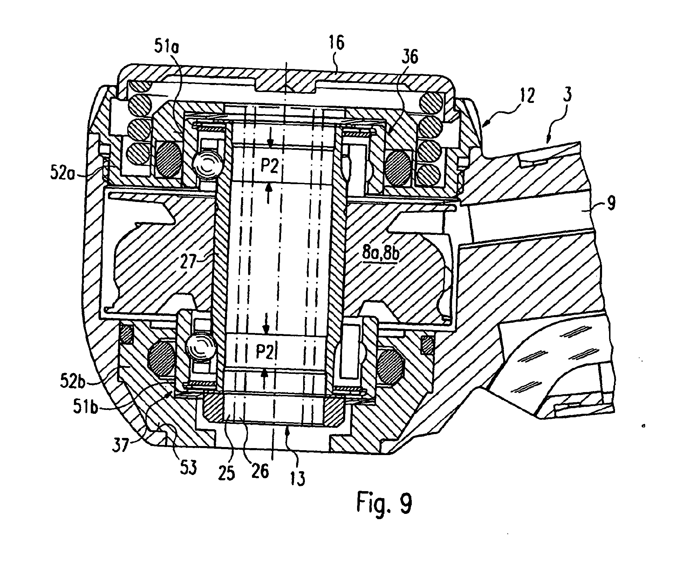

Beim Ausführungsbeispiel nach Fig. 9 sind die Wälzlager 36, 37 in Lagerbohrungen 51a, 51b in Lagereinsätzen 52a, 52b eingesetzt, wobei beide Lagereinsätze 52a, 52b von der der Einstecköffnung 13 abgewandten Seite des Handstückkopfes her eingesetzt sind. Der der Einstecköffnung 13 zugewandt angeordnete Lagereinsatz 52b ist in seiner Querschnittsgröße kleiner als der der Einstecköffnung 13 abgewandt angeordnete Lagereinsatz 52a, wobei letzterer in den Handstückkopf eingeschraubt ist, während der Lagereinsatz 52b in einer nach unten durch eine Schulterfläche 53 begrenzte Lagerausnehmung von oben eingesetzt ist. Im oberen Lagereinsatz 52a ist ein axial einschiebbarer Deckel gelagert, der ein Betätigungselement 16 bildet, mit dem ein Werkzeug 6 aus der nur andeutungsweise dargestellten Spannhülse 26 ausschiebbar ist, die in einer andeutungsweise dargestellten Trägerhülse 25 sitzt.

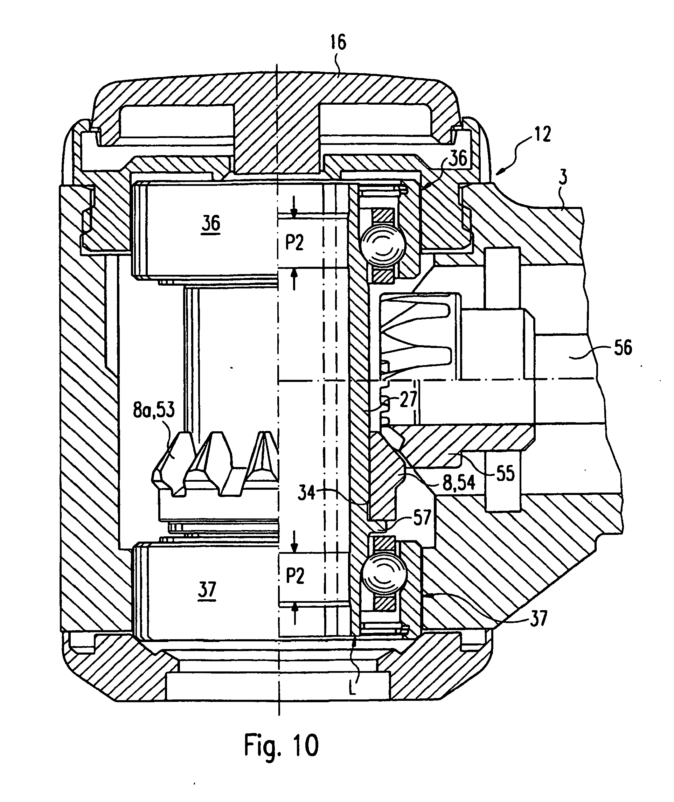

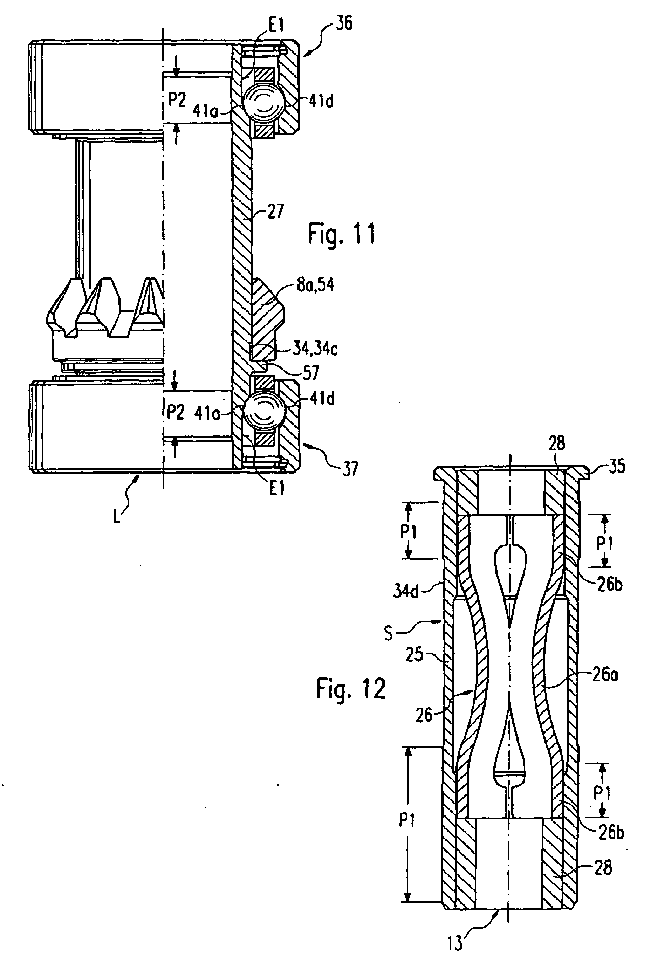

Beim Ausführungsbeispiel gemäß Fig. 10 und 11, bei dem gleiche oder vergleichbare Teile ebenfalls mit gleichen Bezugszeichen versehen sind, ist ein Handstückkopf 12 mit einer Lagereinheit L angeordnet, bei der das Antriebselement 8a durch ein Ritzel 54 gebildet ist, das mit einem Ritzel 55 am vorderen Ende einer sich von hinten nach vorne erstreckenden und im Handstück drehbar gelagerten Antriebswelle 56 kämmt. Dieses Antriebselement 8a bzw. Ritzel 54 kann ebenfalls durch einen Preßverbund oder eine Verklebung auf der Innenlagerhülse 27 befestigt sein. Auch hierbei kann ein Spalt 34 zwischen der Außenmantelfläche der Innenlagerhülse 27 und der Innenmantelfläche des Ritzels 54 zur Aufnahme des Klebers vorgesehen sein, der z. B. durch eine Ringnut 34c in der Innenlagerhülse 27 gebildet sein kann. Zur zusätzlichen axialen Abstützung kann diese Innenlagerhülse 27 eine Ringschulter 57 aufweisen, an der das als Kegelzahnrad ausgebildete Ritzel 54 mit seiner den Zähnen abgewandten Seite anliegt.

Fig. 12 zeigt eine Spanneinheit S mit einer Spannhülse 26, die nicht nur in einem, sondern in beiden Endbereichen Paßflächen P1 aufweist, mit denen sie im Bereich beider Enden in der zugehörigen Trägerhülse 25 exakt positioniert ist.

Bei dieser Spannhülse 26 sind in deren mittleren Längsbereich mehrere auf dem Umfang gleichmäßig verteilt angeordnete Spannsegmente 26a vorgesehen, die an beiden axialen Enden mit hohlzylindrischen oder segmentförmigen Endabschnitten 26b einteilig verbunden sind, die im Längsbereich von den Paßflächen P1 in der Trägerhülse 25 radial zentriert und axial fixiert sind. Letzteres erfolgt durch zwei endseitig in die Trägerhülse 25 eingesetzte und axial fixierte Zwischenhülsen 28. Bei dieser Ausgestaltung ist keine Vorrichtung zum Ausstoßen des Werkzeugs 6 vorgesehen. Das Werkzeug ist durch manuelle Verschiebung einzusetzen und wieder zu entfernen.

Bei dieser Ausgestaltung ist die Spannhülse 26 hinreichend genau in der Trägerhülse 35 zentriert und darin unlösbar befestigt oder mit einer oder beiden Zwischenhülsen 28 lösbar in der Trägerhülse 35 befestigt, wobei die Trägerhülse 35 und die Spannhülse 26 als vorgefertigte Spanneinheit S vor einem Zusammensetzen mit der Innenlagerhülse 27 vorgefertigt werden. Dabei können die Trägerhülse 35 und die Spannhülse 26 vor der Vorfertigung ausgewuchtet worden sein oder nach der Vorfertigung zu einer Spanneinheit S gemeinsam ausgewuchtet sein. Auch bei diesem Ausführungsbeispiel ist deshalb ein Auswuchten bei einem Austausch der Spanneinheit S nicht erforderlich.

Bei diesem und auch bei den übrigen Ausführungsbeispielen kann die Spannhülse 26 durch einen Preßverbund oder durch Verkleben mit der zugehörigen Trägerhülse 25 verbunden sein. Im letzteren Falle ist auch hier wenigstens ein Ringspalt für den Kleber zwischen den aufeinanderliegenden Flächen vorgesehen. Es kann z. B. zwischen den Paßflächen P3 eine kleine Ringnut 34d für den Kleber vorgesehen sein, deren Querschnittsabmessung nur wenige Zehntelmillimeter beträgt, um die Querschnittsgröße der Spannhülse 26 möglichst wenig zu schwächen. Letzteres gilt für alle Ausführungsbeispiele.

Für eine lösbare Klebevorrichtung eignet sich ein Kleber, der beim Lösen der verklebten Bauteile zerstört, z.B. abgeschert wird, oder der durch Wärmeeinwirkung seine Festigkeit verliert.

## Patentansprüche

1. Medizinisches, insbesondere dentalmedizinisches, Handstück (3), in dessen vorderem Endbereich ein Werkzeug (6) einsetzbar ist,
mit einer Spannhülse(26) zur Aufnahme des Werkzeugs (6),
mit einer Trägerhülse (25), in welcher die Spannhülse (26) angeordnet ist,
mit einem mit der Trägerhülse (25) in Antriebsverbindung stehenden Antriebselement (8a),
mit ebenfalls auf der Trägerhülse (25) angeordneten Innenlagerelementen,
mit Außenlagerelementen,
und mit zwischen den Innenlagerelementen und den Außenlagerelementen befindlichen Wälzkörpern (38), wobei die Innenlagerelemente von einer einstückigen Innenlagerhülse (27) gebildet sind, die lösbar auf der Trägerhülse befestigt ist und das Antriebselement (8a) trägt,
**dadurch gekennzeichnet,**
**dass** die Trägerhülse (25) eine radial abstehende Schulter aufweist, an der die Innenlagerhülse (27) anliegt.

2. Handstück nach Anspruch 1,
**dadurch gekennzeichnet,**
**dass** die Innenlagerhülse (27) mit wenigstens in ihren Endbereichen angeordneten Paßflächen (P2) auf der Trägerhülse (25) sitzt.

3. Handstück nach Anspruch 1 oder 2,
**dadurch gekennzeichnet,**
**dass** die Innenlagerhülse (27) und das Antriebselement (8a) eine vormontierte Lagereinheit (L) bilden.

4. Handstück nach Anspruch 3,
**dadurch gekennzeichnet,**
**dass** die Innenlagerhülse (27) und das Antriebselement (8a) vor ihrem Zusammenbau zur Lagereinheit (L) ausgewuchtet worden sind oder die vormontierte Lagereinheit (L) gemeinsam mit der Innenlagerhülse (27) und dem Antriebselement (8a) ausgewuchtet ist.

5. Handstück nach einem der vorherigen Ansprüche
**dadurch gekennzeichnet,**
**dass** die Schulter durch einen Flansch (35) an der Trägerhülse (25) gebildet ist, der vorzugsweise an dem Ende der Trägerhülse (25) angeordnet ist, dass der Seite, von der das Werkzeug her einsteckbar ist, abgewandt ist.

6. Handstück nach einem der vorherigen Ansprüche,
**dadurch gekennzeichnet,**
**dass** die Trägerhülse (25) und die Spannhülse (26) eine vormontierte Spanneinheit (S) bilden.

7. Handstück nach Anspruch 6,
**dadurch gekennzeichnet,**
**dass** die Trägerhülse (25) und die Spannhülse (26) vor ihrem Zusammenbau zur Spanneinheit (S) ausgewuchtet worden sind oder diese vormontierte Spanneinheit (S) gemeinsam mit der Trägerhülse (25) und der Spannhülse (26) ausgewuchtet ist.

8. Handstück nach einem der vorherigen Ansprüche,
**dadurch gekennzeichnet,**
**dass** die Verbindung zwischen der Innenlagerhülse (27) und dem Antriebselement (8a) und/oder der Trägerhülse (25) jeweils ein Preßverbund oder eine Klebeverbindung ist.

9. Handstück nach einem der vorherigen Ansprüche,
**dadurch gekennzeichnet,**
**dass** die Verbindung zwischen der Trägerhülse (25) und der Spannhülse (26) ein Preßverbund oder eine Klebeverbindung ist.

10. Handstück nach einem der vorherigen Ansprüche,
**dadurch gekennzeichnet,**
**dass** die Innenlagerelemente auf der Innenlagerhülse (27) jeweils durch eine Laufrille (41a) gebildet sind, die axial außenseitig für ein Einführen der durch einen Käfig (42) und dem zugehörigen Außenring (36a, 37a) gehaltenen Wälzkörper (38) von außen offen ist.

11. Handstück nach einem der vorherigen Ansprüche 1 bis 9,
**dadurch gekennzeichnet,**
**dass** die Außenlagerelemente durch Laufrillen (41b) in Außenringen (36a, 37a) von Wälzlagern (36, 37) gebildet sind, wobei die Laufrillen (41b) an einer Seite zum Aufschieben des zugehörigen Außenringes (36a, 37a) axial offen sind.

12. Handstück nach Anspruch 10 oder 11,
**dadurch gekennzeichnet,**
**dass** an der offenen Seite der Laufrille (41a jeweils eine radiale Erhöhung (d3) angeordnet ist, die den Wälzkörpern (38) einen axialen Widerstand entgegensetzt, der durch eine axiale Kraft überdrückbar ist.

13. Handstück nach einem Ansprüche 10 bis 12,
**dadurch gekennzeichnet,**
**dass** jeweils neben der offenen Seite der Laufrille (41 a, 41 b) eine Einführungsfläche (E1, E2) angeordnet ist, die stufenförmig oder kontinuierlich zur zugehörigen Laufrille (41a, 41b) oder Erhöhung (d3) hin divergent ist.

14. Handstück nach einem der vorherigen Ansprüche,
**dadurch gekennzeichnet,**
**dass** das Antriebselement (8a) durch ein Turbinenrad oder ein Zahnrad gebildet ist.

## Claims

1. Medical, in particular dental-medical, handpiece (3) into the forward end region of which a tool (6) can be inserted,
having a clamping sleeve (26) for receiving the tool (6),
having a carrier sleeve (23), in which the clamping sleeve (26) is arranged,
having a drive element (8a) standing in drive connection with the carrier sleeve (25),
having inner bearing elements likewise arranged on the carrier sleeve (25),
having outer bearing elements,
and having roller bodies (38) located between the inner bearing elements and the outer bearing elements,
wherein the inner bearing elements are formed by a one-piece inner bearing sleeve (27) which is releasably fastened with the carrier sleeve and carries the drive element (8a),
**characterised in that**,
the carrier sleeve (25) has a radially projecting shoulder on which the inner bearing sleeve (27) bears.

2. Handpiece according to claim 1,
**characterised in that**,
the inner bearing sleeve (27) sits on the carrier sleeve (25) with fitting surfaces (P2) arranged at least in its end regions.

3. Handpiece according to claim 1 or 2,
**characterised in that**,
the inner bearing sleeve (27) and the drive element (8a) form a pre-assembled bearing unit (L).

4. Handpiece according to claim 3,
**characterised in that**,
the inner bearing sleeve (27) and the drive element (8a) are balanced before their assembly to the bearing unit (L) or the pre-assembled bearing unit is balanced (L) together with the inner bearing sleeve (27) and the drive element (8a).

5. Handpiece according to any preceding claim,
**characterised in that**,
the shoulder is formed by a flange (35) on the carrier sleeve (25) which is arranged preferably at that end of the carrier sleeve (25) which is away from the side from which the tool can be inserted.

6. Handpiece according to any preceding claim,
**characterised in that**,
the carrier sleeve (25) and the clamping sleeve (26) form a pre-assembled clamping unit (S).

7. Handpiece according to claim 6,
**characterised in that**,
the carrier sleeve (25) and the clamping sleeve (26) are balanced before their assembly to the clamping unit (S) or this pre-assembled clamping unit (S) is balanced together with the carrier sleeve (25) and the clamping sleeve (26).

8. Handpiece according to any preceding claim,
**characterised in that**,
the connection between the inner bearing sleeve (27) and the drive element (8a) and/or the carrier sleeve (25) is in each case a pressure connection or an adhesive connection.

9. Handpiece according to any preceding claim,
**characterised in that**,
the connection between the carrier sleeve (25) and the clamping sleeve (26) is a pressure connection or an adhesive connection.

10. Handpiece according to any preceding claim,
**characterised in that**,
the inner bearing elements on the inner bearing sleeve (27) are in each case formed by a groove (41a), which is open axially outwardly for introduction from the outside of the roller body (38) held by a cage (42) and the associated outer ring (36a, 37a).

11. Handpiece according to any of preceding claims 1 to 9,
**characterised in that**,
the outer bearing elements are formed by grooves (41b) in outer rings (36a, 37a) of roller bearings (36, 37), wherein the grooves (41b) on one side are open axially for the pushing on of the associated outer ring (36a, 37a).

12. Handpiece according to claim 10 or 11,
**characterised in that**,
one radial elevation (d3) is arranged in each case on the open side of the groove (41a), which offers an axial resistance to the roller bodies (38) which can be overcome by an axial force.

13. Handpiece according to any of claims 10 to 12,
**characterised in that**,
in each case an introduction surface (E1, E2) is arranged next to the open side of the groove (41a, 41b), which is step-like or continuously divergent towards the associated groove (41a, 41b) or elevation (d3).

14. Handpiece according to any preceding claim,
**characterised in that**,
the drive element (8a) is formed by a turbine wheel or a toothed wheel.

## Revendications

1. Pièce à main (3) médicale, notamment dentaire, dans la zone d'extrémité avant de laquelle peut être inséré un outil (6), comprenant
une douille de serrage (26) pour recevoir l'outil (6),
une douille de support (25), dans laquelle la douille de serrage (26) est disposée,
un élément d'entraînement (8a) se trouvant en liaison d'entraînement avec la douille de support (25),
des éléments de palier intérieur également disposés sur la douille de support (25),
des éléments de palier extérieur,
et des éléments roulants (38) se trouvant entre les éléments de palier intérieur et les éléments de palier extérieur, les éléments de palier intérieur étant formés par une douille de palier intérieur (27) d'un seul tenant qui est fixée de manière amovible sur la douille de support et porte l'élément d'entraînement (8a),
**caractérisée en ce que**
la douille de support (25) présente un épaulement dépassant radialement, sur lequel repose la douille de palier intérieur (27).

2. Pièce à main selon la revendication 1,
**caractérisée en ce que**
la douille de palier intérieur (27) prend appui pour au moins des surfaces de contact (P2) prévues dans ses zones d'extrémités, sur la douille de support (25).

3. Pièce à main selon la revendication 1 ou 2,
**caractérisée en ce que**
la douille de palier intérieur (27) et l'élément d'entraînement (8a) forment une unité de palier (L) prémontée.

4. Pièce à main selon la revendication 3,
**caractérisée en ce que**
la douille de palier intérieur (27) et l'élément d'entraînement (8a) ont été équilibrés avant leur assemblage pour former l'unité de palier (L) ou l'unité de palier (L) prémontée est équilibrée conjointement avec la douille de palier intérieur (27) et l'élément d'entraînement (8a).

5. Pièce à main selon l'une quelconque des revendications précédentes,
**caractérisée en ce que**
l'épaulement est formé par une bride (35) sur la douille de support (25), laquelle bride est disposée de préférence sur l'extrémité de la douille de support (25) qui est opposée au côté, par lequel l'outil peut être inséré.

6. Pièce à main selon l'une quelconque des revendications précédentes,
**caractérisée en ce que**
la douille de support (25) et la douille de serrage (26) forment une unité de serrage (S) prémontée.

7. Pièce à main selon la revendication 6,
**caractérisée en ce que**
la douille de support (25) et la douille de serrage (26) ont été équilibrées avant leur assemblage pour former l'unité de serrage (S) ou cette unité de serrage (S) prémontée est équilibrée conjointement avec la douille de support (25) et la douille de serrage (26).

8. Pièce à main selon l'une quelconque des revendications précédentes,
**caractérisée en ce que**
la liaison entre la douille de palier intérieur (27) et l'élément d'entraînement (8a) et/ou la douille de support (25) est respectivement une liaison serrée ou une liaison collée.

9. Pièce à main selon l'une quelconque des revendications précédentes,
**caractérisée en ce que**
la liaison entre la douille de support (25) et la douille de serrage (26) est une liaison serrée ou une liaison collée.

10. Pièce à main selon l'une quelconque des revendications précédentes,
**caractérisée en ce que**
les éléments de palier intérieur sont formés sur la douille de palier intérieur (27) respectivement par une gorge (41a) qui est ouverte de l'extérieur axialement côté extérieur pour une introduction des éléments roulants (38) maintenus par une cage (42) et la bague externe (36a, 37a) afférente.

11. Pièce à main selon l'une quelconque des revendications 1 à 9,
**caractérisée en ce que**
les éléments de palier extérieur sont formés par des gorges (41 b) dans des bagues externes (36a, 37a) de paliers à roulement (36, 37), les gorges (41 b) étant ouvertes axialement sur un côté pour enfoncer la bague externe (36a, 37a) afférente.

12. Pièce à main selon la revendication 10 ou 11,
**caractérisée en ce que**
sur le côté ouvert de la gorge (41 a) est disposée respectivement une élévation (d3) radiale qui oppose aux éléments roulants (38) une résistance axiale qui peut être surmontée par compression par une force axiale.

13. Pièce à main selon l'une quelconque des revendications 10 à 12,
**caractérisée en ce que**
respectivement à côté du côté ouvert de la gorge (41 a, 41 b) est disposée une surface d'introduction (E1, E2) qui est divergente de manière étagée ou continue vers la gorge (41 a, 41 b) afférente ou l'élévation (d3).

14. Pièce à main selon l'une quelconque des revendications précédentes,
**caractérisée en ce que**
l'élément d'entraînement (8a) est formé par une roue de turbine ou une roue dentée.
